# FASCICULE DE BREVET EUROPEEN

(11) **EP 1 499 173 B1**
(45) Date de publication et mention de la délivrance du brevet: **02.11.2005**
(21) Numéro de dépôt: 03746337.9
(22) Date de dépôt: 11.04.2003
(51) Int. Cl.: A01D 82/00, A01D 43/10

(54) **DISPOSITIF DE TRAITEMENT DU FOURRAGE ET FAUCHEUSE AGRICOLE UTILISANT UN TEL DISPOSITIF DE TRAITEMENT DU FOURRAGE**
VORRICHTUNG ZUR BEHANDLUNG VON FUTTER UND EINE SOLCHE VORRICHTUNG ZUR BEHANDLUNG VON FUTTER VERWENDENDE MÄHMASCHINE
DEVICE FOR TREATING FODDER AND REAPING MACHINE WHICH USES ONE SUCH DEVICE FOR TREATING FODDER

(30) Priorité: 18.04.2002 FR 0205100
(43) Date de publication de la demande: 26.01.2005
(73) Titulaire: KUHN S.A., 67706 Saverne Cedex (FR)
(72) Inventeur: LIGOUY, Jean-Baptiste, F-18140 Lugny-Champagne (FR)
(74) Mandataire: Andres, Jean-Claude
(86) Numéro de dépôt international: PCT/FR2003/001154
(87) Numéro de publication internationale: WO 2003/086046

(56) Documents cités:
- GB-A- 842 620
- GB-A- 1 256 554
- NL-A- 8 601 315
- US-A- 4 060 961

## Description

La présente invention se rapporte à un dispositif de traitement du fourrage comportant un rotor entraîné en rotation autour d'un axe, lequel rotor est constitué d'un support et d'au moins un élément de conditionnement, ledit élément de conditionnement comportant au moins une partie active destinée à travailler le fourrage et une première partie de liaison destinée à lier ledit élément de conditionnement audit support au moyen d'une première liaison.

Lors des travaux de fenaison, une bonne conservation du fourrage requiert un séchage complet de l'herbe coupé avant stockage. Les dispositifs de traitement du fourrage, encore appelés conditionneurs, permettent avantageusement de réduire le temps nécessaire à un tel séchage. En effet, ces derniers agissent mécaniquement pour fragmenter la pellicule de cire qui enveloppe les tiges du fourrage. Cette fragmentation favorise une dissipation rapide de l'humidité contenue dans la plante.

Le document FR 2 440 145 décrit une faucheuse comportant un mécanisme de coupe destiné à couper un produit sur pied, par exemple de l'herbe. Pour ce faire, ledit mécanisme de coupe comporte quatre disques disposés suivant une ligne transversale de ladite faucheuse et entraînés en rotation autour d'un axe vertical respectif.

Cette faucheuse connue comporte également un dispositif de traitement destiné à diminuer le temps de séchage du fourrage coupé. A cet effet, ledit dispositif de traitement du fourrage comporte un rotor disposé derrière lesdits disques et entraîné en rotation autour d'un axe horizontal. Ce rotor est constitué d'éléments de conditionnement et d'un support. Chaque élément de conditionnement comporte à l'une de ses extrémités une partie de liaison. La partie de liaison permet de lier de manière pivotante l'élément de conditionnement correspondant audit support au moyen d'une articulation d'axe parallèle à l'axe de rotation dudit rotor. Du fait de la force centrifuge engendrée par la rotation dudit support, l'élément de conditionnement s'étend lors du travail suivant une direction sensiblement radiale.

Ainsi lors du travail, le fourrage provenant du mécanisme de coupe est emmené, par une partie active de l'élément de conditionnement, le long d'une tôle de conditionnement pour finalement être éjecté vers l'arrière de ladite faucheuse. Le passage du fourrage contre ladite tôle de conditionnement provoque une fragmentation des tiges du fourrage propice à un séchage rapide de ce dernier.

Le prospectus « **Faucheuses-Conditionneuses frontales FC 280F / FC 313F Lift Control** » publié par la demanderesse montre une autre faucheuse munie d'un dispositif de traitement du fourrage. Dans ce document, ledit dispositif de traitement du fourrage comporte également un rotor entraîné en rotation autour d'un axe horizontal. Ce rotor est constitué d'un support et d'éléments de conditionnement en forme de « V ». Chaque élément de conditionnement est cette fois-ci lié rigidement audit support par une partie de liaison centrale. Les deux extrémités de la forme en « V » s'étendent en position radiale de manière à former une partie active.

Lors du travail, la fréquence de rotation de tels rotors est généralement comprise entre 600 et 1000 tours par minute. De ce fait en cas de rupture de la liaison entre le support et l'élément de conditionnement, ce dernier est violemment éjecté du rotor par la force centrifuge. L'élément de conditionnement ainsi éjecté constitue un projectile se déplaçant à une vitesse relativement élevée. Ce projectile peut venir endommager d'autres éléments du dispositif de traitement du fourrage, notamment la tôle de conditionnement. D'une manière plus préoccupante encore, un tel projectile peut également être dangereux pour des personnes se trouvant à proximité du dispositif de traitement du fourrage.

Le but de la présente invention est d'éviter qu'un élément de conditionnement puisse occasionner des dommages ou des blessures en cas de rupture de la première liaison liant ledit élément de conditionnement audit support.

A cet effet, le dispositif de traitement du fourrage selon la présente invention est caractérisé par le fait qu'il est prévu une deuxième liaison destinée à lier ledit élément de conditionnement audit support en cas de rupture de ladite première liaison.

En cas de défaillance de ladite première liaison, ladite deuxième liaison permet avantageusement de conserver un lien entre ledit élément de conditionnement et ledit support. Ainsi ledit élément de conditionnement ne sera pas éjecté du rotor. Les risques de blessure et d'endommagement sont donc supprimés.

D'autres caractéristiques de l'invention, à considérer séparément ou dans toutes leurs combinaisons possibles, apparaîtront encore dans la description suivante d'exemples de réalisation non limitatifs de l'invention représentés sur les dessins annexés sur lesquels :
- la **figure 1** représente, vue de dessus, une faucheuse agricole conforme à la présente invention,
- la **figure 2** représente, vue de coté suivant la flèche II définie sur la figure 1 et à une autre échelle, la faucheuse agricole de la figure 1,
- la **figure 3** représente une coupe, vue suivant la flèche III définie sur la figure 1 et à une autre échelle, d'un rotor conforme à la présente invention,
- la **figure 4** représente, à une autre échelle, un élément de conditionnement du rotor de la figure 3,
- la **figure 5** représente, vu de coté suivant la flèche V définie sur la figure 4, l'élément de conditionnement de la figure 4,
- la **figure 6** représente, vue suivant la flèche VI définie sur la figure 3 et à une autre échelle, une portion de la surface du tube de la figure 3,
- la **figure 7** représente, vu de face suivant la flèche VII définie sur la figure 2, une vue partielle d'un autre rotor conforme à la présente invention,
- la **figure 8** représente, vu de coté suivant la flèche VIII définie sur la figure 7 et à une autre échelle, le rotor de la figure 7.

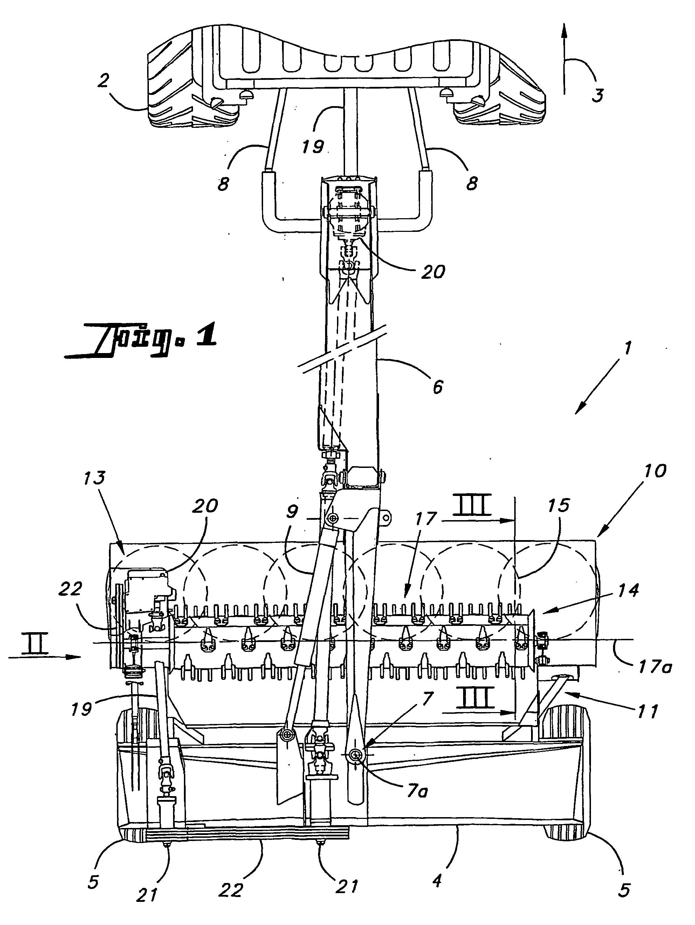

La figure 1 représente, en vue de dessus, une faucheuse agricole (1) conforme à la présente invention. Ladite faucheuse (1) est attelée à un véhicule moteur (2) qui la tire suivant une direction et un sens d'avance indiqué par la flèche (3). Dans la suite de la description, les notions suivantes "avant" et "arrière", "devant" et "derrière" sont définies par rapport au sens d'avance et les notions "droite" et "gauche" sont définies en regardant ladite faucheuse (1) de l'arrière dans le sens d'avance (3).

D'une manière connue de l'homme de l'art, ladite faucheuse (1) comporte un châssis (4) qui repose sur le sol (12) au moyen de deux roues (5). Ledit châssis (4) est lié à l'extrémité arrière d'un timon (6) au moyen d'une articulation centrale (7) d'axe (7a) sensiblement vertical. Pour sa part, l'extrémité avant dudit timon (6) est lié aux barres d'attelage inférieures (8) dudit véhicule moteur (2).

Dans l'exemple de réalisation représenté sur la figure 1, ladite faucheuse (1) est disposée sensiblement dans le prolongement dudit véhicule moteur (2). Cette configuration est utilisée lors du transport de ladite faucheuse (1). Lors du travail, ladite articulation centrale (7) permet, au moyen d'un vérin (9), de décaler ladite faucheuse (1) vers la droite ou vers la gauche dudit véhicule moteur (2). Ladite faucheuse (1) peut ainsi avantageusement travailler en va-et-vient.

D'une manière également connue de l'homme de l'art, ladite faucheuse (1) comporte en sus un groupe de fauche (10) lié audit châssis (4) au moyen d'une suspension (11). Ladite suspension (11) permet audit groupe de fauche (10) de suivre les dénivellations du sol (12) indépendamment dudit châssis (4). Avantageusement, ladite suspension (11) permet également de reporter au moins une partie du poids dudit groupe de fauche (10) sur ledit châssis (4). Ledit groupe de fauche (10) se compose d'un mécanisme de coupe (13) et d'un dispositif de traitement du fourrage (14).

Ledit mécanisme de coupe (13) est destiné à couper un produit sur pied, par exemple de l'herbe. Pour ce faire, ledit mécanisme de coupe (13) comporte plusieurs organes de coupe (15) entraînés en rotation autour d'un axe respectif sensiblement vertical. Lesdits organes de coupe (15), représentés symboliquement sur la figure 1, sont avantageusement disposés suivant une ligne transversale à ladite direction d'avance (3).

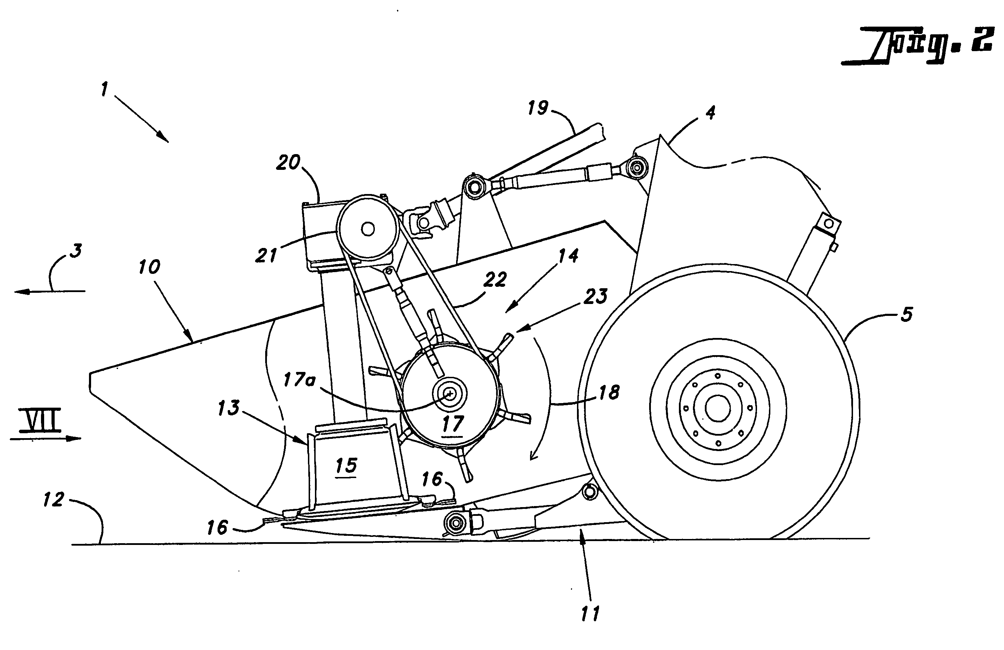

A la lumière de la figure 2, chaque organe de coupe (15) supporte deux éléments de coupe (16). Lors du travail lesdits éléments de coupe (16), encore appelés couteaux, décrivent des cercles dans un plan sensiblement horizontal. La vitesse de déplacement relativement importante desdits éléments de coupe (16), due essentiellement à la rotation desdits organes de coupe (15), permet de couper ledit produit sur pied.

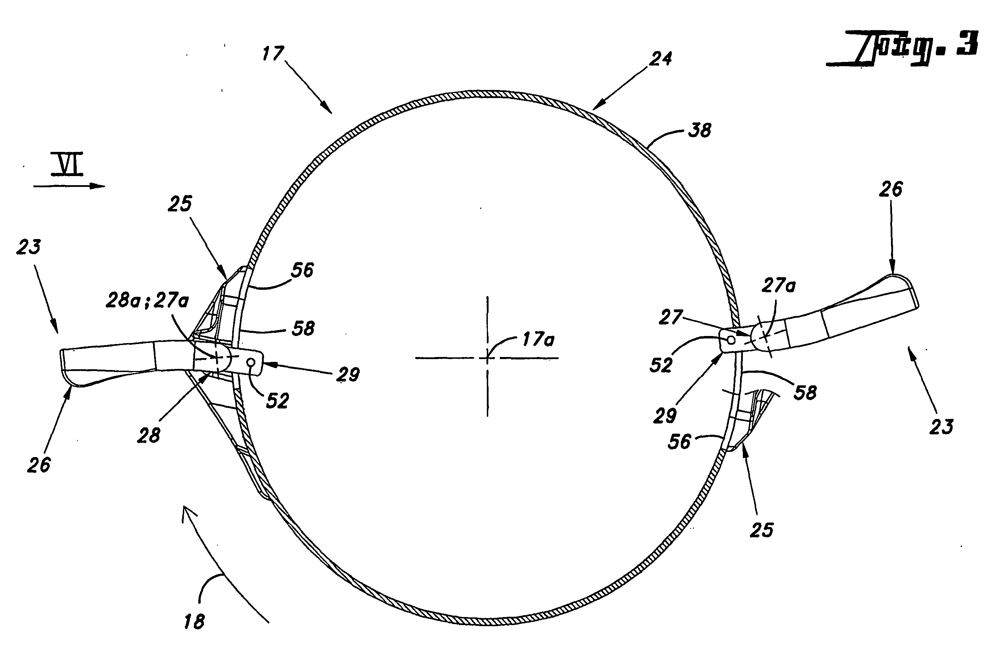

Pour sa part, ledit dispositif de traitement du fourrage (14) est destiné à accélérer le séchage du produit coupé par ledit mécanisme de coupe (13). Pour ce faire, ledit dispositif de traitement du fourrage (14) comporte un rotor (17) entraîné en rotation autour d'un axe (17a) sensiblement horizontal et transversal à ladite direction d'avance (3). Le sens de rotation dudit rotor (17) est indiqué sur les figures 2 et 3 par la flèche (18).

Lors du travail, ledit rotor (17) emmène le fourrage provenant dudit mécanisme de coupe (13) le long d'une tôle de conditionnement. Le passage du fourrage contre ladite tôle de conditionnement provoque une fragmentation propice à un séchage rapide du produit coupé. Ladite tôle de conditionnement étant à la portée de l'homme de l'art, elle n'a donc pas été représentée sur les figures.

D'une manière connue de l'homme de l'art, ladite faucheuse (1) comporte également des éléments de transmission destinés à transmettre un mouvement de rotation d'une prise de force dudit véhicule moteur (2) jusqu'auxdits éléments de coupe (16) et audit rotor (17). Ces éléments de transmission sont notamment des arbres télescopiques à joints universels (19), des carters de renvoi (20), des poulies (21) et des courroies (22).

Certains éléments de ladite faucheuse (1) n'ont été représentés que partiellement sur les figures 1 et 2 afin de faciliter la compréhension de la présente invention.

Afin d'emmener efficacement le fourrage, ledit rotor (17) est constitué d'un support (24) et d'au moins un élément de conditionnement (23). En effet, chaque élément de conditionnement (23) est pourvu d'une partie active (26) s'étendant lors du travail suivant une direction au moins sensiblement radiale par rapport audit axe de rotation (17a). Lesdites parties actives (26) agissent ainsi à la manière de griffes pour entraîner le fourrage le long de ladite tôle de conditionnement. Chaque élément de conditionnement (23) comporte également une première partie de liaison (27) destinée à lier ledit élément de conditionnement (23) audit support (24) au moyen d'une première liaison.

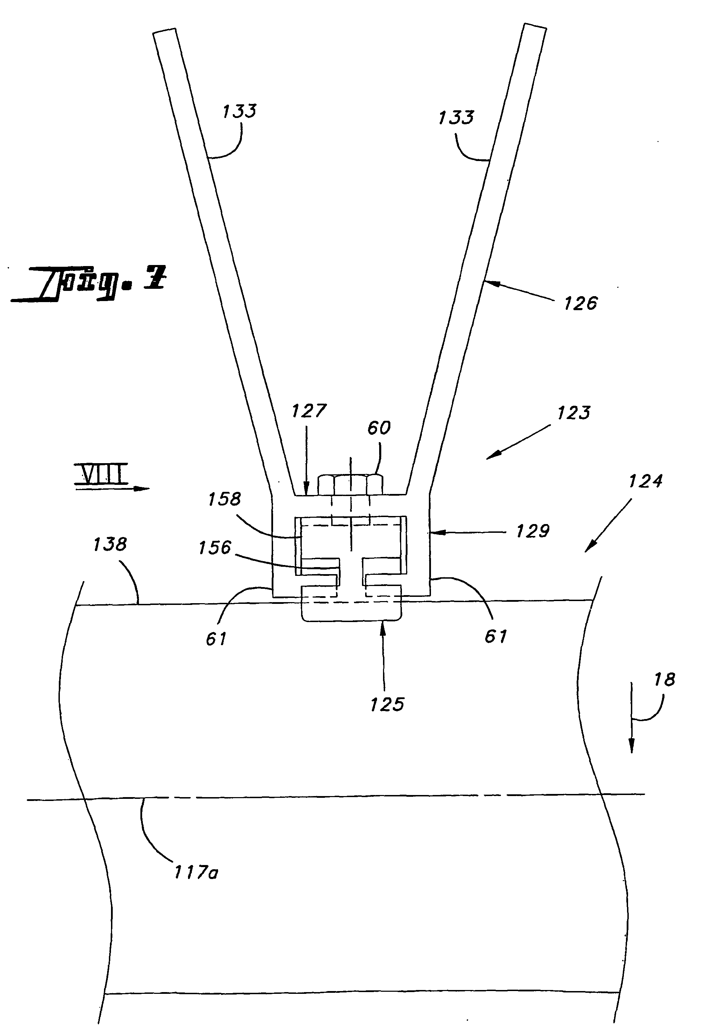

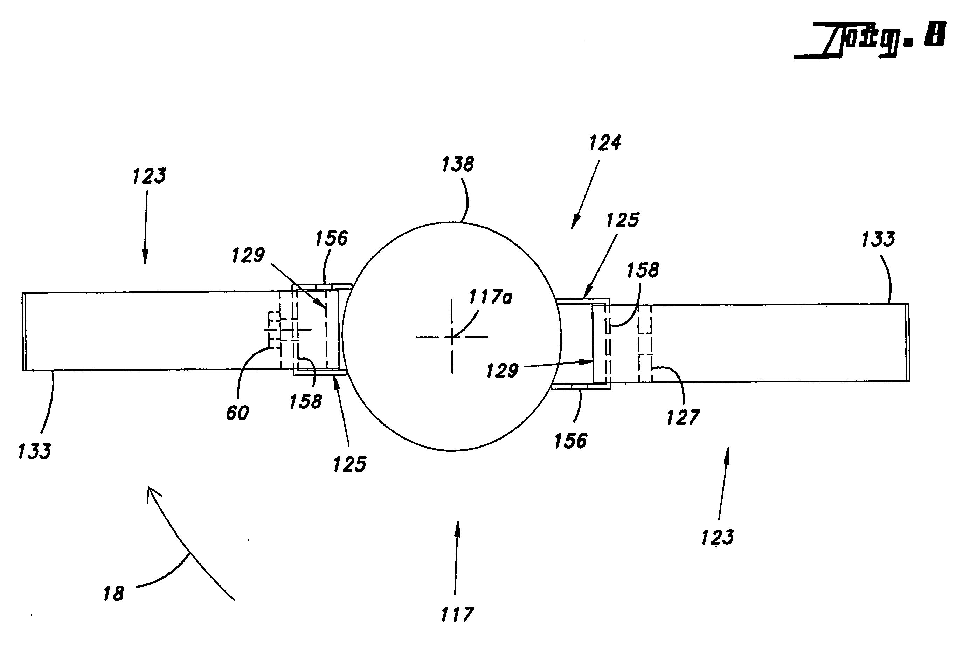

Dans le premier exemple de réalisation représenté sur les figures 1 à 6, ladite première liaison lie de manière pivotante ledit élément de conditionnement (23) audit support (24). Par contre dans le deuxième exemple de réalisation représenté sur les figures 7 et 8, ladite première liaison lie de manière rigide ledit élément de conditionnement (123) audit support (124). Le deuxième exemple de réalisation sera décrit ultérieurement plus en détails.

Dans le premier exemple de réalisation, ladite première liaison est réalisée au moyen d'une articulation (28) de type pivot et d'axe (28a). De manière préférentielle, l'axe (28a) de ladite articulation (28) est au moins sensiblement parallèle à l'axe de rotation (17a) dudit rotor (17). Ainsi en cas de rencontre avec un obstacle, ladite partie active (26) dudit élément de conditionnement (23) peut avantageusement s'esquiver en pivotant vers l'arrière par rapport au sens de rotation (18) dudit rotor (17).

Plus précisément et à la lumière de la figure 3, ladite première partie de liaison (27) dudit élément de conditionnement (23) a une forme cylindrique d'axe longitudinal (27a). Pour sa part, ledit support (24) comporte au moins un élément de liaison (25) muni d'une empreinte de forme complémentaire à la forme cylindrique de ladite première partie de liaison (27). Ledit support (24) est également constitué d'un tube (38) dont l'axe longitudinal est confondu avec l'axe de rotation (17a) dudit rotor (17). Ledit élément de liaison (25) est fixé sur la surface dudit tube (38), avantageusement de manière amovible. Lors de l'assemblage de cet exemple de réalisation dudit rotor (17), la forme cylindrique de ladite première partie de liaison (27) vient se prendre dans l'empreinte dudit élément de liaison (25) de manière à réaliser ladite articulation (28). D'une manière avantageuse, l'axe (27a) de ladite partie de liaison (27) est au moins sensiblement confondu avec l'axe (28a) de ladite articulation (28).

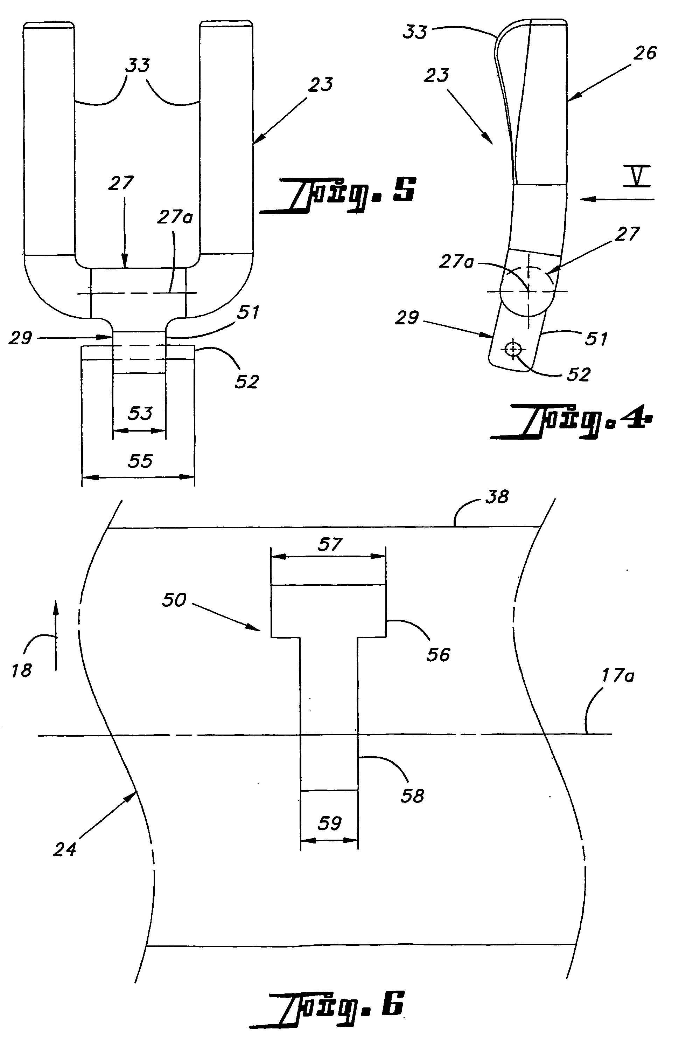

Dans l'exemple de réalisation représenté plus précisément sur les figures 4 et 5, ladite partie active (26) desdits éléments de conditionnement (23) comporte deux doigts (33) sensiblement identiques. Lesdits doigts (33) sont décalés l'un par rapport à l'autre suivant une direction sensiblement parallèle à l'axe longitudinal (27à) de ladite partie de liaison (27) tout en restant sensiblement parallèles entre eux. De plus, lesdits doigts (33) sont sensiblement perpendiculaires à l'axe longitudinal (27a) de ladite partie de liaison (27). Lesdits doigts (33) sont également légèrement courbés afin de pouvoir libérer facilement le fourrage après le passage de ladite tôle de conditionnement.

Chaque extrémité de ladite forme cylindrique (27) se prolonge jusqu'à un doigt respectif (33). Ladite partie active (26) et ladite partie de liaison (27) forment ainsi sensiblement un "U". Ledit élément de conditionnement (23) ne risque donc pas de se translater excessivement par rapport audit élément de liaison correspondant (25) suivant l'axe (28a) de ladite articulation (28).

Suivant une caractéristique importante de la présente invention, il est prévu une deuxième liaison destinée à lier ledit élément de conditionnement (23) audit support (24) en cas de rupture de ladite première liaison.

Dans le premier exemple de réalisation, en cas de rupture de ladite première liaison, ladite deuxième liaison s'effectue plus précisément entre ledit élément de conditionnement (23) et ledit tube (38). D'une manière préférentielle, ladite deuxième liaison s'effectue entre une deuxième partie de liaison (29) dudit élément de conditionnement (23) et ledit tube (3 8).

Pour ce faire et à la lumière des figures 4 et 5, ladite deuxième partie de liaison (29) comporte un corps (51) et une tête (52). Ledit corps (51) est lié à ladite première partie de liaison (27) et ladite tête (52) est avantageusement distante dudit axe (27a) de ladite première partie de liaison (27). De plus, la largeur (55) de ladite tête (52), vue suivant ledit axe (27a), est supérieure à la largeur (53) dudit corps (51). De préférence, ladite deuxième partie de liaison (29) s'étend de manière au moins sensiblement perpendiculaire à ladite première partie de liaison (27). Dans l'exemple de réalisation représenté sur les figures 4 et 5, ladite tête (52) est réalisée au moyen d'un élément élastiquement déformable inséré transversalement dans ledit corps (51). Selon un autre exemple de réalisation non représenté, ledit corps (51) et ladite tête (52) sont réalisés au moyen d'une seule et unique pièce.

D'une manière avantageuse, ladite deuxième partie de liaison (29) s'étend au moins partiellement à l'intérieur dudit tube (38). Ladite deuxième partie de liaison (29) est ainsi protégée contre notamment le contact répété avec le produit coupé. Pour ce faire dans le premier exemple de réalisation représenté plus particulièrement sur la figure 6, la surface dudit tube (38) comporte au moins une encoche (50). Ladite encoche (50) se compose d'une zone d'entrée (56) dont la largeur (57) vue suivant ledit axe de rotation (17a) est supérieure ou égale à ladite largeur (55) de ladite tête (52). Ladite zone d'entrée (56) permet l'introduction au moins partielle de ladite deuxième partie de liaison (29) dans ledit tube (38). Ladite encoche (50) comporte également une zone de maintien (58) dont la largeur (59), vue suivant ledit axe de rotation (17a) est inférieure à ladite largeur (55) de ladite tête (52) mais supérieure ou égale à ladite largeur (53) dudit corps (51). Ladite zone de maintien (58) dudit tube (38) est destinée à coopérer avec ladite deuxième partie de liaison (29) dudit élément de conditionnement (23) de manière à réaliser ladite deuxième liaison. Ladite encoche (50) s'étend de préférence suivant un plan au moins sensiblement perpendiculaire audit axe de rotation (17a). De plus vue suivant le sens de rotation (18) dudit support (24), ladite zone d'entrée (56) est avantageusement disposée en avant de ladite zone de maintien (58).

Afin de simplifier la compréhension de la présente invention, la vue en coupe dudit rotor (17) représentée sur la figure 3 ne comporte que deux éléments de conditionnement (23) liés audit tube (38) au moyen d'un élément de liaison respectif (25).

L'élément de conditionnement (23) situé à gauche de la figure 3 est représenté en position de travail normal. Ledit élément de conditionnement (23) est donc lié audit support (24) au moyen de ladite première liaison. Ladite tête (52) de ladite deuxième partie de liaison (29) n'est pas en contact avec ledit tube (38). Ladite deuxième liaison n'est donc pas effective.

Par contre l'élément de conditionnement (23) situé à droite de la figure 3 est représenté après rupture de ladite première liaison. Ladite tête (52) vient en contact avec la surface intérieure dudit tube (38). La largeur (59) de ladite zone de maintien (58) étant inférieure à la largeur (55) de ladite tête (52), ledit élément de conditionnement (23) ne sera donc pas éjecté dudit support (24). Tout déplacement excessif, suivant les autres directions que la direction radiale, dudit élément de conditionnement (23) par rapport audit support (24) est supprimé par le contact dudit corps (51) sur les bords de ladite zone de maintien (58). Ledit élément de conditionnement (23) situé à droite est donc lié audit support (24) au moyen de ladite deuxième liaison.

Une des causes possibles de la rupture de ladite première liaison étant la casse dudit élément de liaison (25), l'élément de liaison (25) situé à droite de la figure 3 n'est représenté que partiellement de manière à symboliser cette rupture.

Le plan de coupe dans lequel est représenté la figure 3 traverse deux encoches (50) afin de pouvoir les visualiser. Par contre pour des raisons de clarté, ledit élément de liaison (25) et ledit élément de conditionnement (23) correspondants n'ont pas été sectionnés sur la figure 3.

Les figures 7 et 8 représentent un deuxième exemple de réalisation d'un rotor (117) selon la présente invention. Ce rotor (117) comporte un certain nombre d'éléments qui ont été décrits précédemment. Ces éléments garderont par conséquent le même numéro de repère et ne seront pas décrits une nouvelle fois. Il comporte également un certain nombre d'éléments qui sont comparables à des éléments du rotor (17) décrit précédemment. Ces éléments seront affectés du même numéro de repère que ces éléments comparables du rotor (17) mais augmenté de 100. Ils ne seront décrits que si cela s'avère nécessaire.

Ledit rotor (117), représenté sur les figures 7 et 8, peut avantageusement être monté sur ladite faucheuse (1) en lieu et place dudit rotor (17) représenté notamment sur les figures 1 et 2. Ainsi, ledit rotor (117) est également entraîné en rotation autour d'un axe (117a) sensiblement horizontal et transversal à ladite direction d'avance (3).

Dans le deuxième exemple de réalisation représenté sur les figures 7 et 8, ledit rotor (117) comporte également un support (124) et au moins un élément de conditionnement (123). A la lumière de la figure 7, ledit élément de conditionnement (123) a une forme en « V ». Les deux doigts (133) de la forme en «V» s'étendent lors du travail suivant une direction au moins sensiblement radiale par rapport audit axe de rotation (117a). Lesdits doigts (133) forment ainsi une partie active (126). La partie centrale dudit élément de conditionnement (123) constitue une première partie de liaison (127) destinée à lier ledit élément de conditionnement (123) audit support (124) au moyen d'une première liaison.

Par contre dans le deuxième exemple de réalisation, ladite première liaison lie de manière rigide ledit élément de conditionnement (123) audit support (124). D'une manière préférentielle, ledit élément de conditionnement (123) est lié rigidement mais de manière amovible audit support (124) par ladite première liaison.

Plus précisément et à la lumière des figures 7 et 8, ladite première partie de liaison (127) dudit élément de conditionnement (123) a une forme relativement plane. Pour sa part, ledit support (124) comporte au moins un élément de liaison (125) muni également d'une partie relativement plane. Une vis (60) permet de plaquer ladite première partie de liaison (127) sur ledit élément de liaison (125) de manière à réaliser ladite première liaison. Ledit support (124) est constitué en sus d'un tube (138) dont l'axe longitudinal est confondu avec l'axe de rotation (117a) dudit rotor (117). Cette fois-ci, ledit élément de liaison (125) est fixé sur la surface dudit tube (138) par soudure par exemple afin de ne pas être démontable.

Suivant une caractéristique importante de la présente invention, il est prévu une deuxième liaison destinée à lier ledit élément de conditionnement (123) audit support (124) en cas de rupture de ladite première liaison.

Dans le deuxième exemple de réalisation, en cas de rupture de ladite première liaison, ladite deuxième liaison s'effectue plus précisément entre ledit élément de conditionnement (123) et ledit élément de liaison (125). D'une manière préférentielle, ladite deuxième liaison s'effectue entre une deuxième partie de liaison (129) dudit élément de conditionnement (123) et ledit élément de liaison (125).

Pour ce faire et à la lumière de la figure 7, ladite deuxième partie de liaison (129) comporte deux pattes (61). Chaque patte (61) comporte une branche dirigée de manière radiale vers ledit axe de rotation (117a) et une branche dirigée suivant ledit axe de rotation (117a). Lesdites pattes (61) sont avantageusement orientées l'une vers l'autre de manière à ce que, vue suivant ledit axe de rotation (117a), la distance séparant lesdites pattes (61) comporte un rétrécissement.

Pour sa part, ledit support (125) comporte une zone d'entrée (156) permettant le passage du rétrécissement de ladite deuxième partie de liaison (129). Ledit support (125) comporte également une zone de maintien (158) destinée à coopérer avec lesdites pattes (61) dudit élément de conditionnement (123) de manière à réaliser ladite deuxième liaison. Vue suivant le sens de rotation (18) dudit support (124), ladite zone d'entrée (156) est avantageusement disposée en avant de ladite zone de maintien (158).

Afin de simplifier la compréhension de la présente invention, la figure 8 ne représente que deux éléments de conditionnement (123) liés audit élément de liaison respectif (125).

L'élément de conditionnement (123) situé à gauche de la figure 8 est représenté en position de travail normal. Ledit élément de conditionnement (123) est donc lié audit support (124) au moyen de ladite première liaison. Lesdites pattes (61) de ladite deuxième partie de liaison (129) ne sont pas en contact avec ladite zone de maintien (158). Ladite deuxième liaison n'est donc pas effective.

Par contre l'élément de conditionnement (123) situé à droite de la figure 8 est représenté après rupture de ladite première liaison. Ledit élément de conditionnement (123) étant entraîné par la force centrifuge, lesdites pattes (61) viennent donc en contact avec ladite zone de maintien (158). A la lumière de la figure 7, la largeur de ladite zone de maintien (158) étant supérieure audit rétrécissement entre lesdites pattes (61), ledit élément de conditionnement (123) ne sera donc pas éjecté dudit support (124). Ledit élément de conditionnement (123) situé à droite sur la figure 8 est ainsi lié audit support (124) au moyen de ladite deuxième liaison.

D'une manière préférentielle lorsque lesdites pattes (61) sont en contact avec ladite zone de maintien (158), ledit rétrécissement entre lesdites pattes (61) est situé en dehors de ladite zone d'entrée (156). Ceci est particulièrement visible sur la partie droite de la figure 8. Ainsi en cas de rupture de ladite première liaison, ladite deuxième partie de liaison (129) ne risque pas de franchir ladite zone d'entrée (156). Ladite deuxième liaison est donc parfaitement sécurisée.

La faucheuse (1), le dispositif de traitement du fourrage (14) et les rotors (17 ; 117) qui viennent d'être décrits, ne sont que des exemples qui ne sauraient en aucun cas limiter le domaine de protection défini par les revendications suivantes.

En effet, le dispositif de traitement du fourrage (14) conforme à la présente invention peut également équiper une machine agricole ne comportant pas de mécanisme de coupe (13). Une telle machine agricole est uniquement destinée à traiter un produit, lequel a été coupé par une autre machine.

## Revendications

1. Dispositif de traitement du fourrage comportant un rotor (17 ; 117) entraîné en rotation autour d'un axe (17a; 117a), lequel rotor (17 ; 117) est constitué d'un support (24 ; 124) et d'au moins un élément de conditionnement (23 ; 123), ledit élément de conditionnement (23 ; 123) comportant au moins une partie active (26 ; 126) destinée à travailler le fourrage et une première partie de liaison (27 ; 127) destinée à lier ledit élément de conditionnement (23 ; 123) audit support (24 ; 124) au moyen d'une première liaison, ***caractérisé par le fait qu'***il est prévu une deuxième liaison destinée à lier ledit élément de conditionnement (23 ; 123) audit support (24 ; 124) en cas de rupture de ladite première liaison.

2. Dispositif de traitement du fourrage selon la revendication 1, ***caractérisé par le fait que*** ledit élément de conditionnement (23 ; 123) comporte une deuxième partie de liaison (29 ; 129) destinée à lier ledit élément de conditionnement (23 ; 123) audit support (24 ; 124) au moyen de ladite deuxième liaison en cas de rupture de ladite première liaison.

3. Dispositif de traitement du fourrage selon la revendication 1 ou 2, ***caractérisé par le fait que*** ledit support (24 ; 124) est constitué d'un tube (38 ; 138) et d'au moins un élément de liaison (25 ; 125).

4. Dispositif de traitement du fourrage selon la revendication 3, ***caractérisé par le fait que*** ladite deuxième liaison est destinée à lier ledit élément de conditionnement (23) audit tube (38) en cas de rupture de ladite première liaison.

5. Dispositif de traitement du fourrage selon la revendication 4, ***caractérisé par le fait que*** ladite deuxième partie de liaison (29) comporte un corps (51) et une tête (52), la largeur (55) de ladite tête (52) étant supérieure à la largeur (53) dudit corps (51).

6. Dispositif de traitement du fourrage selon la revendication 5, ***caractérisé par le fait que*** ledit corps (51) est lié à ladite première partie de liaison (27).

7. Dispositif de traitement du fourrage selon l'une quelconque des revendications 4 à 6, ***caractérisé par le fait que*** ladite deuxième partie de liaison (29) s'étend au moins partiellement à l'intérieur dudit tube (38).

8. Dispositif de traitement du fourrage selon la revendication 7, ***caractérisé par le fait que*** la surface dudit tube (38) comporte au moins une encoche (50) permettant l'introduction au moins partielle de ladite deuxième partie de liaison (29) dans ledit tube (38).

9. Dispositif de traitement du fourrage selon la revendication 8 prise en combinaison avec la revendication 5, ***caractérisé par le fait que*** ladite encoche (50) comporte une zone d'entrée (56) dont la largeur (57) est supérieure ou égale à ladite largeur (55) de ladite tête (52).

10. Dispositif de traitement du fourrage selon la revendication 9, ou la revendication 8 prise en combinaison avec la revendication 5, ***caractérisé par le fait que*** ladite encoche (50) comporte une zone de maintien (58) dont la largeur (59) est inférieure à ladite largeur (55) de ladite tête (52) mais supérieure ou égale à ladite largeur (53) dudit corps (51).

11. Dispositif de traitement du fourrage selon l'une quelconque des revendications 8 à 10, ***caractérisé par le fait que*** ladite encoche (50) s'étend suivant un plan au moins sensiblement perpendiculaire audit axe de rotation (17a) dudit rotor (17).

12. Dispositif de traitement du fourrage selon l'une quelconque des revendications 8 à 11, ***caractérisé par le fait que,*** vue suivant un sens de rotation (18) dudit rotor (17), ladite zone d'entrée (56) est disposée en avant de ladite zone de maintien (58).

13. Dispositif de traitement du fourrage selon l'une quelconque des revendications 3 à 12, ***caractérisé par le fait que*** ledit élément de liaison (25) est lié de manière amovible audit tube (38).

14. Dispositif de traitement du fourrage selon l'une quelconque des revendications 1 à 13, ***caractérisé par le fait que*** ladite première liaison est une articulation (28) de type pivot.

15. Dispositif de traitement du fourrage selon la revendication 3, ***caractérisé par le fait que*** ladite deuxième liaison est destinée à lier ledit élément de conditionnement (123) audit élément de liaison (125) en cas de rupture de ladite première liaison.

16. Machine agricole, ***caractérisée par le fait qu'***elle comporte un dispositif de traitement du fourrage (14) selon l'une quelconque des revendications 1 à 15.

17. Machine agricole selon la revendication 16, ***caractérisée par le fait que*** ladite machine agricole est une faucheuse (1).

## Patentansprüche

1. Vorrichtung zur Futterbehandlung mit einem Rotor (17; 117), der in Drehung um eine Achse (17a; 117a) angetrieben wird, wobei der Rotor (17; 117) von einer Stütze (24; 124) und mindestens einem Aufbereitungselement (23; 123) gebildet ist, wobei das Aufbereitungselement (23; 123) mindestens einen aktiven Teil (26; 126), der dazu bestimmt ist, das Futter zu behandeln, und einen ersten aktiven Verbindungsteil (27; 127) umfasst, der dazu bestimmt ist, das Aufbereitungselement (23; 123) mit der Stütze (24; 124) mit Hilfe einer ersten Verbindung zu verbinden, ***dadurch gekennzeichnet,* dass** eine zweite Verbindung vorgesehen ist, die dazu bestimmt ist, das Aufbereitungselement (23; 123) mit der Stütze (24; 124) im Falle des Bruchs der ersten Verbindung zu verbinden.

2. Vorrichtung zur Futterbehandlung nach Anspruch 1, ***dadurch gekennzeichnet,* dass** das Aufbereitungselement (23; 123) einen zweiten Verbindungsteil (29; 129) umfasst, der dazu bestimmt ist, das Aufbereitungselement (23; 123) mit der Stütze (24; 124) mit Hilfe der zweiten Verbindung im Falle des Bruchs der ersten Verbindung zu verbinden.

3. Vorrichtung zur Futterbehandlung nach Anspruch 1 oder 2, ***dadurch gekennzeichnet,* dass** die Stütze (24; 124) von einem Rohr (38; 138) und mindestens einem Verbindungselement (25; 125) gebildet ist.

4. Vorrichtung zur Futterbehandlung nach Anspruch 3, ***dadurch gekennzeichnet,* dass** die zweite Verbindung dazu bestimmt ist, das Aufbereitungselement (23) mit dem Rohr (38) im Falle des Bruchs der ersten Verbindung zu verbinden.

5. Vorrichtung zur Futterbehandlung nach Anspruch 4, ***dadurch gekennzeichnet,* dass** der zweite Verbindungsteil (29) einen Körper (51) und einen Kopf (52) umfasst, wobei die Breite (55) des Kopfes (52) größer als die Breite (53) des Körpers (51) ist.

6. Vorrichtung zur Futterbehandlung nach Anspruch 5, ***dadurch gekennzeichnet,* dass** der Körper (51) mit dem ersten Verbindungsteil (27) verbunden ist.

7. Vorrichtung zur Futterbehandlung nach irgend einem der Ansprüche 4 bis 6, ***dadurch gekennzeichnet,* dass** sich der zweite Verbindungsteil (29) zumindest teilweise im Inneren des Rohrs (38) erstreckt.

8. Vorrichtung zur Futterbehandlung nach Anspruch 7, ***dadurch gekennzeichnet,* dass** die Oberfläche des Rohrs (38) mindestens eine Kerbe (50) umfasst, die die zumindest teilweise Einführung des zweiten Verbindungsteils (29) in das Rohr (38) ermöglicht.

9. Vorrichtung zur Futterbehandlung nach Anspruch 8 in Kombination mit Anspruch 5, ***dadurch gekennzeichnet,* dass** die Kerbe (50) eine Eintrittszone (56) umfasst, deren Breite (57) größer oder gleich der Breite (55) des Kopfes (52) ist.

10. Vorrichtung zur Futterbehandlung nach Anspruch 9 oder Anspruch 8 in Kombination mit Anspruch 5, ***dadurch gekennzeichnet,* dass** die Kerbe (50) eine Haltezone (58) umfasst, deren Breite (59) geringer als die Breite (55) des Kopfes (52) aber größer oder gleich der Breite (53) des Körpers (51) ist.

11. Vorrichtung zur Futterbehandlung nach irgend einem der Ansprüche 8 bis 10, ***dadurch gekennzeichnet,* dass** sich die Kerbe (50) entlang einer im Wesentlichen zur Drehachse (17a) des Rotors (17) senkrechten Ebene erstreckt.

12. Vorrichtung zur Futterbehandlung nach irgend einem der Ansprüche 8 bis 11, ***dadurch gekennzeichnet,* dass** entlang einer Drehrichtung (18) des Rotors (17) gesehen die Eintrittszone (56) vor der Haltezone (58) angeordnet ist.

13. Vorrichtung zur Futterbehandlung nach irgend einem der Ansprüche 3 bis 12, ***dadurch gekennzeichnet,* dass** das Verbindungselement (25) abnehmbar mit dem Rohr (38) verbunden ist.

14. Vorrichtung zur Futterbehandlung nach irgend einem der Ansprüche 1 bis 13, ***dadurch gekennzeichnet,* dass** die erste Verbindung ein Drehzapfengelenk (28) ist.

15. Vorrichtung zur Futterbehandlung nach Anspruch 3, ***dadurch gekennzeichnet,* dass** die zweite Verbindung dazu bestimmt ist, das Aufbereitungselement (123) mit dem Verbindungselement (125) im Falle eines Bruchs der ersten Verbindung zu verbinden.

16. Landwirtschaftliche Maschine, ***dadurch gekennzeichnet,* dass** sie eine Vorrichtung zur Futterbehandlung (14) nach irgend einem der Ansprüche 1 bis 15 umfasst.

17. Landwirtschaftliche Maschine nach Anspruch 16, ***dadurch gekennzeichnet,* dass** die landwirtschaftliche Maschine eine Mähmaschine (1) ist.

## Claims

1. Device for treating fodder comprising a rotor (17; 117) driven in rotation about an axis (17a; 117a), which rotor (17; 117) consists of a support (24; 124) and of at least one conditioning element (23; 123), the said conditioning element (23; 123) comprising at least one active part (26; 126) intended to work the fodder and a first connecting part (27; 127) intended to connect the said conditioning element (23; 123) to the said support (24; 124) by means of a first connection, ***characterized in* that** a second connection is provided, this being intended to connect the said conditioning element (23; 123) to the said support (24; 124) should the said first connection break.

2. Fodder treatment device according to Claim 1, ***characterized in* that** the said conditioning element (23; 123) comprises a second connecting part (29; 129) intended to connect the said conditioning element (23; 123) to the said support (24; 124) by means of the said second connection should the said first connection break.

3. Fodder treatment device according to Claim 1 or 2, ***characterized in* that** the said support (24; 124) consists of a tube (38; 138) and of at least one connecting element (25; 125).

4. Fodder treatment device according to Claim 3, ***characterized in* that** the said second connection is intended to connect the said conditioning element (23) to the said tube (38) should the said first connection break.

5. Fodder treatment device according to Claim 4, ***characterized in* that** the said second connecting part (29) comprises a body (51) and a head (52), the width (55) of the said head (52) exceeding the width (53) of the said body (51).

6. Fodder treatment device according to Claim 5, ***characterized in* that** the said body (51) is connected to the said first connecting part (27).

7. Fodder treatment device according to any one of Claims 4 to 6, ***characterized in* that** the said second connecting part (29) extends at least partially inside the said tube (38).

8. Fodder treatment device according to Claim 7, ***characterized in* that** the surface of the said tube (38) has at least one notch (50) allowing the said second connecting part (29) to be introduced at least partially into the said tube (38).

9. Fodder treatment device according to Claim 8 taken in combination with Claim 5, ***characterized in* that** the said notch (50) comprises an entry area (56) the width (57) of which is greater than or equal to the said width (55) of the said head (52).

10. Fodder treatment device according to Claim 9, or Claim 8 taken in combination with Claim 5, ***characterized in* that** the said notch (50) has a holding area (58) the width (59) of which is less than the said width (55) of the said head (52) but greater than or equal to the said width (53) of the said body (51).

11. Fodder treatment device according to any one of Claims 8 to 10, ***characterized in* that** the said notch (50) extends in a plane at least substantially perpendicular to the said axis of rotation (17a) of the said rotor (17).

12. Fodder treatment device according to any one of Claims 8 to 11, ***characterized in* that**, viewed in a direction of rotation (18) of the said rotor (17), the said entry area (56) is arranged forward of the said holding area (58).

13. Fodder treatment device according to any one of Claims 3 to 12, ***characterized in* that** the said connecting element (25) is connected removably to the said tube (38).

14. Fodder treatment device according to any one of Claims 1 to 13, ***characterized in* that** the said first connection is an articulation (28) of the pivot type.

15. Fodder treatment device according to Claim 3, ***characterized in* that** the said second connection is intended to connect the said conditioning element (123) to the said connecting element (125) should the said first connection break.

16. Agricultural machine, ***characterized in* that** it comprises a fodder treatment device (14) according to any one of Claims 1 to 15.

17. Agricultural machine according to Claim 16, ***characterized in* that** the said agricultural machine is a mower (1).
